# EUROPEAN PATENT APPLICATION

(11) **EP 1 182 847 A1**
(43) Date of publication of application: **27.02.2002**
(21) Application number: 01914199.3
(22) Date of filing: 23.03.2001
(51) Int. Cl.: H04L 29/14, G06F 11/20, G06F 11/00, H04B 7/26, H04Q 3/545

(54) **COMMUNICATION CONTROL DEVICE AND CONTROL METHOD**

(30) Priority: 28.03.2000 JP 2000089280
(71) Applicant: MATSUSHITA ELECTRIC INDUSTRIAL CO., LTD., Kadoma-shi, Osaka 571-8501 (JP)
(72) Inventor: NAGASAWA, Toshiaki, Yokosuka-shi, Kanagawa 239-0807 (JP)
(74) Representative: Grünecker, Kinkeldey, Stockmair & Schwanhäusser Anwaltssozietät
(86) International application number: JP0102314
(87) International publication number: WO0174033

(57) **Abstract**

When operations of control sections 102a and 102b are changed, if the type of unprocessed data is not changed, the whole of table A' of control section 102b corresponding to table A of control section 102a is cleared, table B is created in an area different from table A', the old type data stored in table A is converted to new type data and stored in table B. After this data type conversion processing is started, difference data (old type data) written in control section 102a is stored in table A' after all data is cleared, this stored difference data is converted to new type data and written in table B and the corresponding data in table A' is cleared. When there is no more difference data through this data type conversion processing, switching between the operational and standby systems is performed.

## Description

### Technical Field

The present invention relates to a communication control apparatus and control method, and more particularly, to a communication control apparatus and control method used for a communication apparatus subject to continuous operation.

### Background Art

With the spread of communication networks and diversification of user demands in recent years, the purpose of software updating for communication control apparatuses is not limited to a conventional way of correction of nonconformities, but is more heavily weighted toward functional additions to improve services, and even if the type of data which constitutes system resources is specified once, it is likely to be changed or expanded later.

A conventional method for updating software of a control apparatus, etc. is disclosed in the Unexamined Japanese Patent Publication No.HEI 5-89061.

since an operation of a communication control apparatus subject to continuous operation cannot be halted for a long time, the apparatus is provided with a plurality of CPU cards with a same function classified into an active system that executes communication control software and a standby system that performs maintenance. When software is updated, at least one CPU card is always used as the active system and software updating is executed from the remaining CPU cards on standby.

The above-described communication control apparatus updates the software in the standby system and then changes the CPU cards from the standby system to the active system and continues to operate the CPU cards with updated software and at the same time changes the CPU cards from the active system to the standby system to update the software.

Thus, the conventional communication control apparatus switches the plurality of CPU cards with the same function between the active system and standby system to update software. Therefore, to facilitate a changeover from the active system to the standby system, the conventional communication control apparatus is constructed in such a way that the data stored to be processed in the active system is also transferred to the standby system so that the data stored in the active system always matches the data stored in the standby system.

However, there are cases where, for example, software processing 8-bit data may be updated to software processing 16-bit data in order to improve the functions of a communication control apparatus. In this case, it is also necessary to change the type of data stored from 8 bits to 16 bits.

In this case, since the communication control apparatus is operating continuously, in the period after the standby system changes the above-described software and converts the data type until the 16-bit software is started after completion of the changeover to the active system, the communication control apparatus is operated under the active system before the system changeover takes place. For this reason, the 8-bit data which is the old data type is also transferred to the standby system and stored and remains as unprocessed data. Since the data type of this unprocessed data remains as 8-bit data, it is difficult to process this unprocessed data using the newly started 16-bit software. This involves a problem that switching between the active system and standby system without leaving any unprocessed data behind requires the system operation to be stopped.

On the other hand, as a method of updating software and switching between the active system and standby system without stopping the operation, a method of updating software to upward compatible software capable of processing both old and new types of data is available. However, repetitive software updates involving data type conversion in this method may generate overhead, which is likely to deteriorate the processing performance of the communication apparatus as a whole.

### Disclosure of Invention

It is an object of the present invention to provide a communication control apparatus and control method capable of updating software and switching between an active system and standby system without reducing the processing performance of the communication apparatus as a whole and without stopping the operation.

This object can be attained by the standby system converting data beforehand, before a changeover from the active system to the standby system, to data compatible with the software to be updated and converting the data input during software updating, after the changeover, to data compatible with the updated software.

### Brief Description of Drawings

FIG.1 is a block diagram showing a configuration of a communication control apparatus according to an embodiment of the present invention;
FIG.2 illustrates a program configuration used by the communication control apparatus according to the embodiment above;
FIG.3 is a flow chart showing an operation example of the communication control apparatus according to the embodiment above;
FIG.4 is a flow chart showing an operation example of the communication control apparatus according to the embodiment above;
FIG.5 is a flow chart showing an operation example of the communication control apparatus according to the embodiment above;
FIG.6 is a flow chart showing an operation example of the communication control apparatus according to the embodiment above; and
FIG.7 is a flow chart showing an operation example of the communication control apparatus according to the embodiment above.

### Best Mode for Carrying out the Invention

With reference now to the attached drawings, embodiments of the present invention will be explained in detail below.

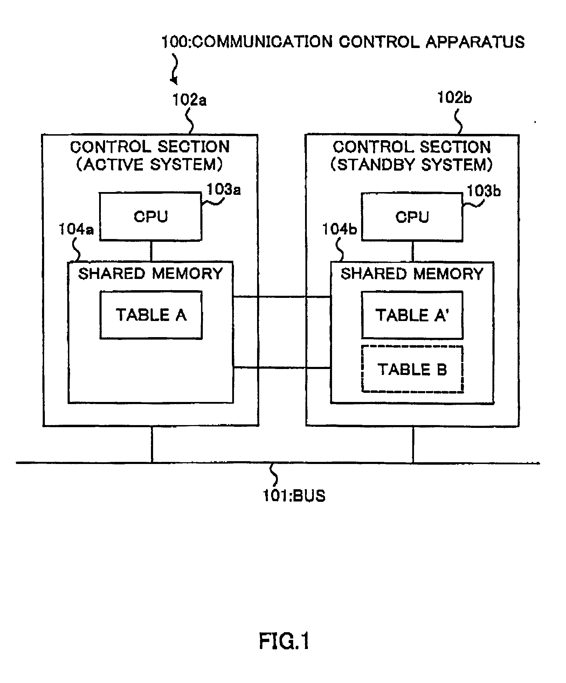

FIG.1 is a block diagram showing a configuration of a communication control apparatus according to an embodiment of the present invention.

Communication control apparatus 100 shown in this FIG.1 is used, for example, for a base station apparatus, base station control apparatus or exchange apparatus, etc. in a mobile communication system. This communication control apparatus 100 is subject to continuous operation 24 hours a day, and therefore requires reliability.

Since the operation of the communication control apparatus operating 24 hours a day cannot be stopped for a long time, the apparatus is provided with a plurality of control sections with a same function, for example, CPU cards, classified into an active system that executes communication control software and a standby system that performs maintenance.

Then, at least one control section is always used as the active system and when software is updated, software is updated from the remaining control sections on standby.

After the software of the standby system is updated, the control section of the standby system is changed to the active system, the operation of the apparatus continues with updated software and the control section of the active system is changed to the standby system. Thus, while the operation of the apparatus continues with the new software after the changeover, the software of the control section which has been changed to the standby system is updated.

An example of a communication apparatus equipped with two control sections will be explained below.

In FIG.1, communication control apparatus 100 is mainly constructed of control section 102a and control section 102b. Control section 102a and control section 102b have configurations similar to each other and operate as an active system or a standby system. External bus 101 is a bus that connects control section 102a and control section 102b.

Control section 102a of the active system is provided with CPU 103a and shared memory 104a connected via an internal bus and control section 102b of the standby system is also provided with CPU 103b and shared memory 104b connected via an internal bus.

Thus, communication control apparatus 100 has a redundant configuration provided with two control sections to secure a high level of reliability with only one of control section 102a or control section 102b operating as an active system.

Furthermore, to secure continuation of the operation of the redundant control section during a changeover between the active system and the standby system, the two control sections are provided with shared memories 104a and 104b, respectively. A same content can be written into these shared memories 104a and 104b simultaneously so that the contents of the two memories always match.

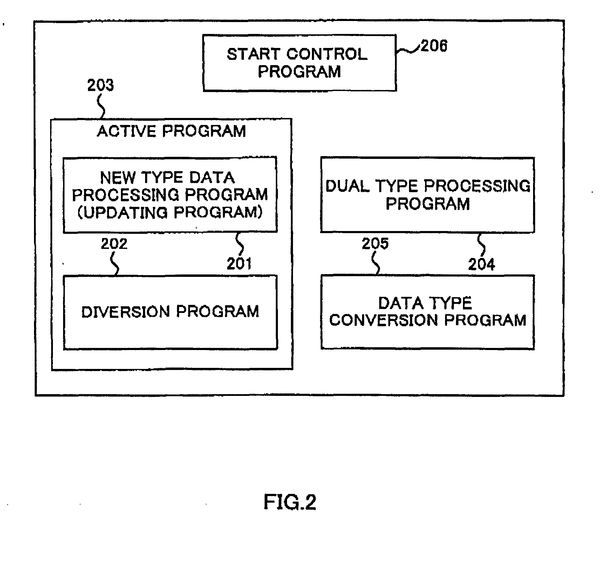

Then, a configuration of operation software used by CPU 103a and CPU 103b for various kinds of processing will be explained. FIG.2 illustrates a program configuration used by the communication control apparatus of this embodiment.

As shown in FIG.2, the program is mainly constructed of operational program 203 provided with new type data processing program (update program) 201 capable of processing new type data and diversion program 202 that carries out normal processing, and three types of functional programs operating when data is updated which constitute features of this embodiment, that is, dual-type processing program 204, data type conversion program 205 and start control program 206.

Dual-type processing program 204 can process both types of data, an old data type (e.g. 8-bit type) and new data type (e.g. 16-bit type).

Data type conversion program 205 converts data from an old data type to a new data type.

Start control program 206 operates first after hardware is initialized at the startup and controls the entire functional program. For example, start control program 206 exerts control such as starting necessary programs and closing unnecessary programs.

By executing these dual-type processing program 204, data type conversion program 205 and start control program 206, communication control apparatus 100 can convert the data type while continuing the operation without lapsing into overload and after software is updated, can operate without affecting the processing performance.

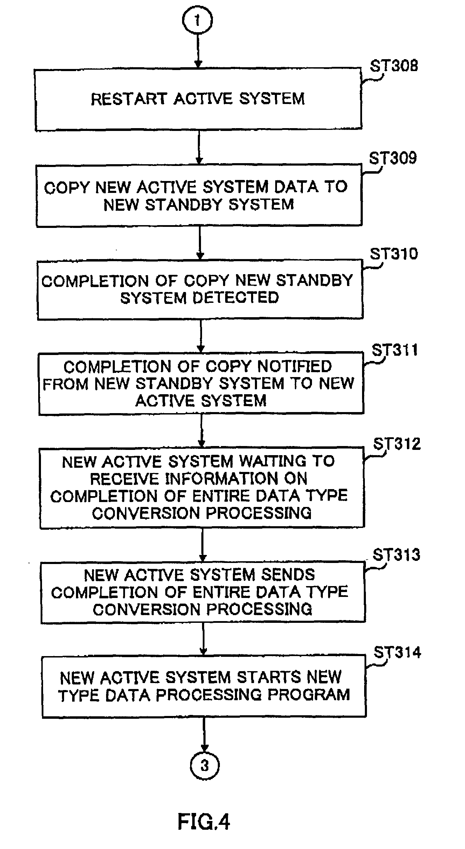

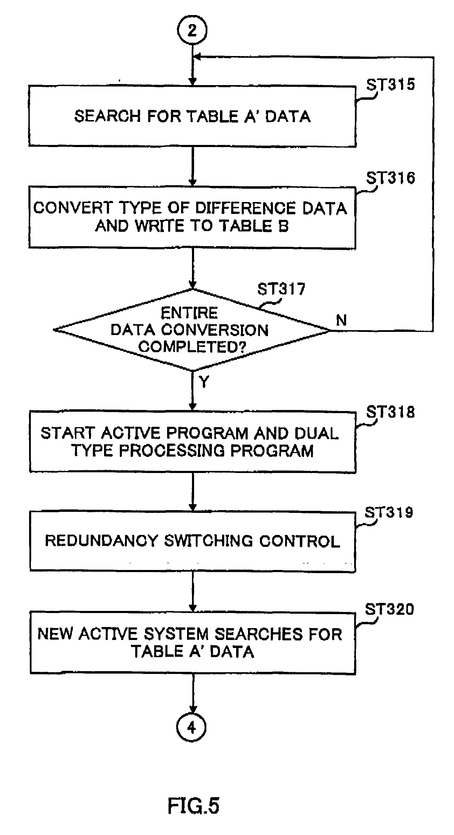

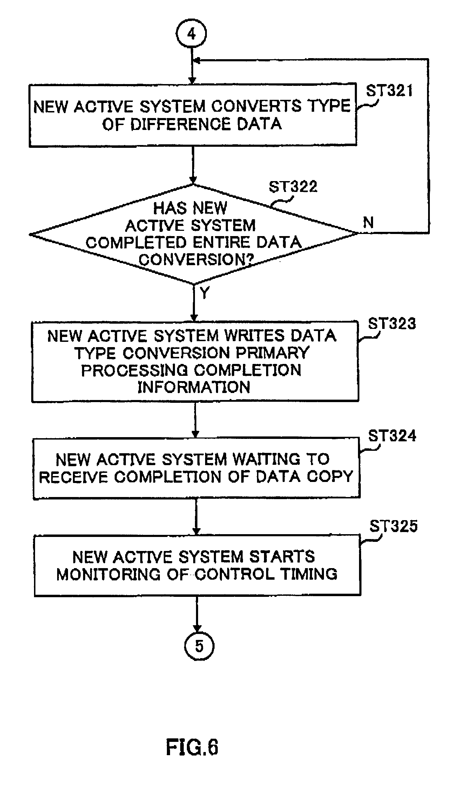

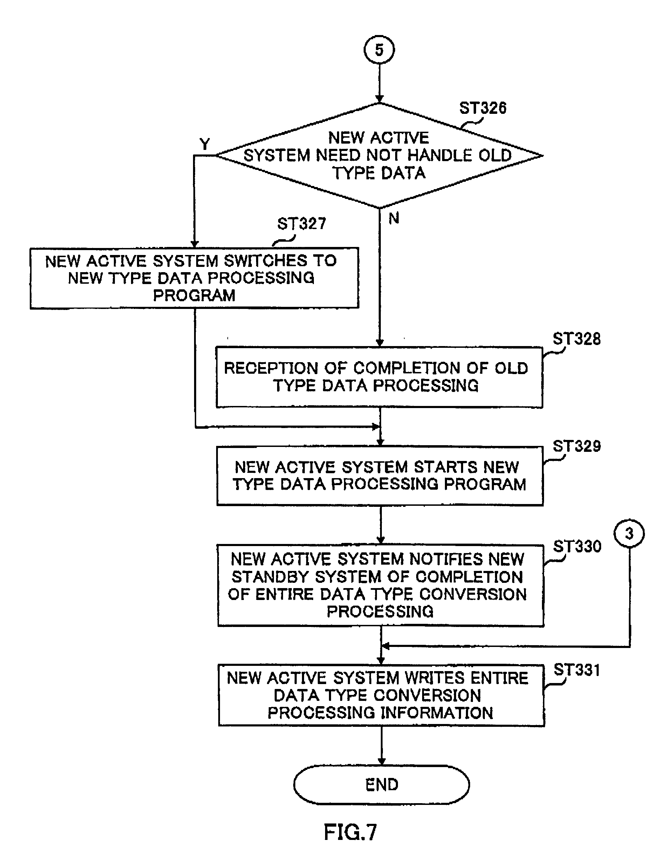

The operation of a changeover between the active system and standby system of control sections 102a and 102b of communication control apparatus 100 in such a configuration will be explained with reference to the flow charts shown in FIG.3, FIG.4, FIG.5, FIG. 6 and FIG.7, FIG.3, FIG.4, FIG.5, FIG.6 and FIG.7 are flow charts showing examples of the operation of the communication control apparatus according to this embodiment.

Hereinafter, the control section that operates as the active system will be referred to as the "active system" and the control section that operates as the standby system will be referred to as the "standby system".

Here, a case where control section 102a is operating as the active system and control section 102b is operating as the standby system will be explained first.

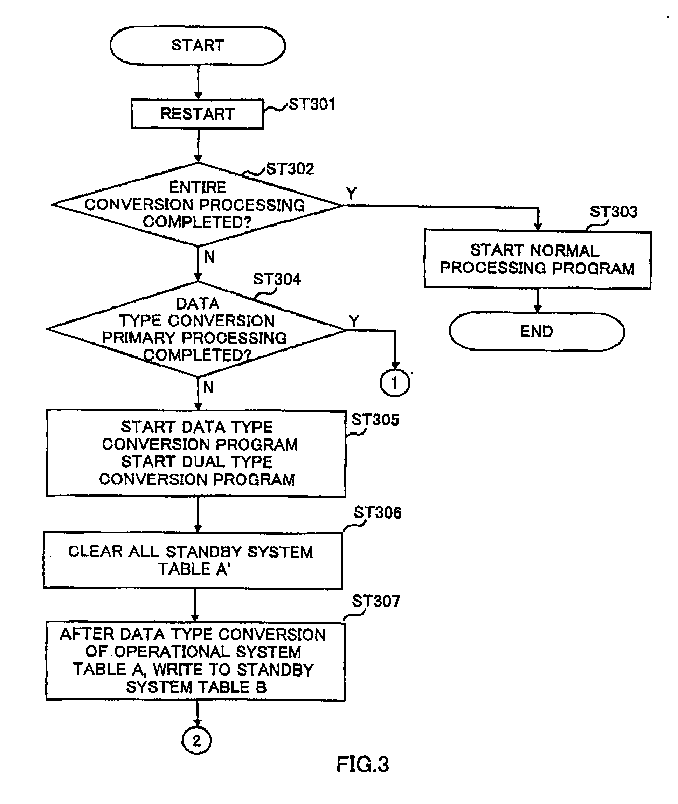

In FIG.3, in step (hereinafter referred to as "ST") 301, the software of control section 102b operating as the standby system is updated and control section 102b is restarted.

In ST302, start control program 206 in the standby system determines whether the entire processing of converting data from the old data type to the new data type has completed or not. In the case where the entire data type conversion processing has completed, the process moves on to ST303. In the case where the entire data type conversion processing has not completed, the process moves on to ST304.

In ST303, the normal processing program in the standby system starts to process the new type data. This allows the standby system to start as a new active system and the processing of switching between the active system and standby system ends.

In ST304, start control program 206 in the standby system determines whether the data type conversion processing (data type conversion primary processing) of the standby system has completed or not. In the case where the data type conversion processing has completed, the process moves on to ST308. In the case where the data type conversion processing has not completed, the process moves on to ST305.

In the case where control section 102b of the standby system is waiting for a notice of completion of a data copy from control section 102a of the active system, it is determined in ST304 in FIG.3 that data type conversion primary processing in control section 102b has completed, and therefore the process moves on to ST308.

In ST305, start control program 206 in the standby system starts data type conversion program 205 and dual-type processing program 204.

In ST306, data type conversion program 205 in the standby system clears all table A' of a simultaneous write area of control section 102b of the standby system. Here, table A' is a table corresponding to table A created in the storage area of shared memory 104a of control section 102a operating as the active system. After clearing all data table A', control section 102b of the standby system stores difference data after data type conversion processing is started in table A'.

Here, the difference data refers to old type data transferred from control section 102a of the active system to control section 102b of the standby system while the data type conversion processing is in progress . That is, this old type data is transferred to and stored in all-cleared table A'.

In ST307, data type conversion program 205 in the standby system reads data requiring a data type conversion from table A of control section 102a in the active system, converts the data type, stores the converted new type data in table B and moves on to ST315. Here, table B is a storage area different from table A' in shared memory 104b of control section 102b in the standby system.

In ST308, the software of control section 102a that operates as a new standby system is updated and control section 102a is restarted. After this restart, start control program 206 confirms that data type conversion primary processing has completed and control section 102a, except new type data processing program 201 handling new type data, starts all other operational program 203, data type conversion program 205 and dual-type processing program 204.

Hereinafter, control section 102b which has changed from the standby system to the active system will be referred to as a "new active system" and control section 102a which has changed from the active system to the standby system will be referred to as a "new standby system".

In ST309, existing operational program 203 in the new standby system copies the entire data of shared memory 104b of control section 102b that operates-as the new active system to the same area of shared memory 104a of control section 102a that operates as the new standby system so that the data in the active system and data in the standby system match.

Furthermore, since the difference data produced during this copy is copied simultaneously to control section 102a that operates as the new standby system by the simultaneous write function of the redundant memory of communication control apparatus 100, no special processing is required and the data in control section 102b and the data in control section 102 a match completely.

In ST310, start control program 206 in the new standby system detects completion of data matching between control section 102b and control section 102a through timer monitoring, a final copy data write check or a data copy program operation status check in diversion program 202, etc.

In ST311, start control program 206 in the new standby system detects completion of data matching between control section 102b and control section 102a and then start control program 206 in control section 102a that operates as the new standby system notifies start control program 206 in control section 102b that operates as the new active system of the completion of a data copy.

In ST312, control section 102a that operates as the new standby system waits for a notice that the entire data type conversion processing has been completed from control section 102b that operates as the new active system.

In ST313, control section 102b adds a parameter indicating that the entire data type conversion processing has been completed to a non-volatile memory which is read by control section 102b itself at the time of a restart. By start control program 206 recognizing the parameter indicating the completion of the entire data type conversion processing at the time of a restart such as after a reset, it is possible to control so that data type conversion program 205 and dual-type processing program 204 do not start. Furthermore, control section 102b sends a notice of completion of the entire data type conversion processing to control section 102a.

In ST314, start control program 206 of control section 102a closes data type conversion program 205 and dual-type processing program 204 and starts final new type data processing program 201.

After this, as in the case of control section 102b, control section 102a also adds a parameter indicating the completion of the entire data type conversion processing to a non-volatile memory which control section 102a itself reads at the time of a restart. By start control program 206 recognizing the parameter indicating the completion of the entire data type conversion processing at the time of a restart such as after a reset, it is possible to control so that data type conversion program 205 and dual-type processing program 204 do not start.

In ST315, in control section 102b operating as the standby system, data type conversion program 205 searches for difference data of table A'.

In ST316, data type conversion program 205 in the standby system converts the searched difference data to new type data, writes the converted data in table B and at the same time clears the converted data in table A'.

In ST317, data type conversion program 205 in the standby system determines whether the data type of all difference data has been converted through the processing in ST315 and ST316 or not. In the case where the data type of all difference data has been converted, the process moves on to ST318 and in the case where the data type of all difference data has not been converted, the process goes back to ST315.

Here, control section 102a operating as the active system is also performing communication control together, and therefore the processing load of the CPU is higher than control section 102b of the standby system. That is, the speed at which control section 102a of the active system writes difference data is always lower than the processing speed at which control section 102b of the standby system converts a data type. For this reason, by continuing the conversion processing from ST315 to ST317, it is possible to convert the entire difference data written to control section 102b of the standby system without fail.

In ST318, start control program 206 in the standby system starts all operational program 203 and dual-type processing program 204 other than new type data processing program 201 at the timing at which there is no longer difference data to be stored in table A' of control section 102b of the standby system.

In ST319, diversion program 202 switches between control section 102a of the active system and control section 102b of the standby system, More specifically, diversion program 202 allows the control section which is operating in the active system to operate in the standby system and allows the control section which is operating in the standby system to operate in the active system. The processing of switching between the active system and standby system is performed according to the switching control system of the redundant system specific to communication control apparatus 100. That is, at this time, control section 102b of the standby system becomes control section 102b of a new active system and control section 102a that has been operating in the active system so far becomes control section 102a of a new standby system.

In ST320, at the time at which the standby system and active system are switched round, a tiny time lag of conversion processing may be produced and data whose data type has not been converted may remain in table A'.

Therefore, data type conversion program 205 in the new active system searches for old type data which has not been updated after the switching is completed from table A'.

In ST321, if the result of searching of difference data in the new active system shows that the difference data still remains, data conversion program 205 converts all the difference data of table A' to new type data, writes the converted data in table B and at the same time clears the difference data of table A'.

In ST322, data conversion program 205 in the new active system determines whether the conversion of the data type of all the difference data has been completed through the processing in ST321 or not. In the case where the conversion of the data type of all the difference data has been completed, the process moves on to ST323. In the case where the conversion of the data type of all the difference data has not been completed, the process goes back to ST321.

In ST323, when the conversion of the data type of all the difference data has been completed in the new active system, data type conversion program 205 writes a flag, etc. of a state indicating the completion of data type conversion primary processing of control section 102b that operates as the active system to shared memory 104b.

At this time, old type data is sent from an externally connected apparatus (not shown) under the control of communication control apparatus 100 and written in table A'. Control section 102b that operates as the new active system only continues processing of searching for the old type data of table A' through data type conversion program 205, converting the old type data to new type data and writing in table B.

When the conversion of the data type of all difference data is completed, dual-type processing program 204 starts operation. Dual-type processing program 204 writes old type data in table A' and writes new type data in table B. At this time, the old type data in table A' is converted to new type data by conversion program 205 and written in table B as appropriate. Hereafter, dual-type processing program 204 continues the operation while handling both the new and old data types.

In ST324, control section 102b that operates as the new active system waits for a notice of the completion of a data copy from control section 102a that operates as the new standby system.

In ST325, upon reception of the notice of the completion of the data copy, start control program 206 of control section 102b operating as the new active system starts monitoring of the control timing.

Here, the control timing refers to a timing at which start control program 206 closes data type conversion program 205 and dual-type processing program 204 and starts final operational program 203 that handles only new type data.

In ST326, control section 102b determines whether old type data needs to be handled or not at the start of monitoring of the control timing. In the case where old type data needs not be handled, the process moves on to ST327. In the case where old type data needs to be handled, the process moves on to ST32B.

In ST327, control section 102b changes the program to the new type data processing program.

In ST328, start control program 206 of control section 102b receives a notice of completion of a data copy and receives a notice of completion of processing of old type data sent from an externally connected device.

In ST329, start control program 206 of control section 102a closes data type conversion program 205 and dual-type processing program 204 and starts final new type data processing program 201.

In ST330, control section 102b notifies start control program 206 of control section 102a that the entire data type conversion processing has completed.

In ST331, control section 102b in the new active system adds a parameter indicating completion of the processing to the non-volatile memory which control section 102b reads and start control program 206 recognizes the parameter at the time of a restart such as a reset, which provides control so that data type conversion program 205 and dual-type processing program 204 do not start.

As shown above, when the entire data type conversion processing is completed and the normal processing program in operational program 203 is started, the processing of switching between the active system and standby system is completed.

Furthermore, with the processing in ST328 and ST329, it is also possible to control so that the program is changed to new type data processing program 201 when, for example, a specific command is received at an arbitrary point in time hereafter due to an addition of an external event input mechanism.

For example, a control for processing data of a pattern (e.g., all 0's or 1's) different from the operational processing data is built into dual type processing program 204 and a command using this data is input from the outside so that dual type processing program 204 notifies start control program 206 of the timing of completion of old type data processing. This allows the switching timing to be controlled without affecting other programs.

In this case, if the old type data processing is not completed in a short time, a changeover between apparatuses may occur again due to a fault. However, since the progress of the processing is controlled, the start control program of control section 102a operating as the new standby system is not notified of completion of the entire processing until the program is changed to the final operational program, and therefore control section 102a of the new standby system can also start operation while continuing processing of a mixture of old type data and new type data.

As is apparent from the above explanations, according to the present invention, when a changeover between the active system and standby system takes place, the standby system converts beforehand the data prior to the changeover to data corresponding to the software to be updated and converts the data input during software updating to data compatible with the software updated after the changeover, and the present invention can thereby update software and switch between the active system and standby system without raducing the processing performance of the apparatus as a whole and without stopping the operation.

The communication control apparatus of the present invention is applicable to a communication apparatus, base station apparatus and communication terminal apparatus and is capable of updating software and switching between the active system and standby system without reducing the processing performance of the communication apparatus, base station apparatus and communication terminal apparatus and without stopping these operations.

This application is based on the Japanese Patent Application No.2000-089280 filed on March 28, 2000, entire content of which is expressly incorporated by reference herein.

### Industrial Applicability

The present invention is ideally applicable to a communication apparatus, base station apparatus or mobile station apparatus.

## Claims

1. A communication control apparatus that comprises a plurality of processing apparatuses and storing means for storing data shared by said processing apparatuses, executes a program using at least one processing apparatus as an active system processing apparatus and updates a program that operates the other processing apparatuses as standby system processing apparatuses, wherein the standby system processing apparatuses convert old type data handled by the program before updating to new type data handled by the updated program and after this conversion processing, at least one of said standby system processing apparatuses operates as a new active system processing apparatus and the active system processing apparatus updates the program as a standby system processing apparatus.

2. The communication control apparatus according to claim 1, wherein the standby system processing apparatus converts existing old type data to new type data before the switching between the active system and standby system and converts the old type data entered while this conversion processing is in progress to new type data.

3. The communication control apparatus according to claim 1, wherein the standby system processing apparatus is autonomously changed to operate as the active system after converting old type data to new type data and at the same time the active system processing apparatus is changed to operate as the standby system.

4. The communication control apparatus according to claim 3, wherein after changed to operate as the active system, the standby system processing apparatus converts the old type data entered during the change of the operation to new type data.

5. The communication control apparatus according to claim 1, wherein after converting old type data to new type data, the standby system processing apparatus stores information indicating completion of the conversion.

6. The communication control apparatus according to claim 1, wherein after receiving information that copying has been completed and information that processing of old data has been completed from the new standby system, the standby system processing apparatus stores information indicating completion of the data type conversion and in the case where said information exists at the time of a restart, starts a program to process new type data.

7. The communication control apparatus according to claim 1, wherein after changed to operate as the standby system, the active system processing apparatus copies data from the new active system processing apparatus and after completing copying, notifies the new active system processing apparatus of the completion of copying.

8. The communication control apparatus according to claim 1, wherein after receiving information indicating completion of a data type conversion from the new active systemprocessing apparatus, the active system processing apparatus stores information indicating completion of the data type conversion, and starts a program to process new type data when said information exists at the time of a restart.

9. A base station apparatus equipped with a communication control apparatus, wherein the standby system processing apparatuses of said communication control apparatus convert old type data handled by the program before the update to new type data handled by the program after the update and after this conversion processing, at least one of said standby system processing apparatuses operates as a new active system processing apparatus and the operational processing apparatus updates the program as a standby system processing apparatus.

10. A communication terminal apparatus equipped with a communication control apparatus, wherein the standby system processing apparatuses of said communication control apparatus convert old type data handled by the program before the update to new type data handled by the program after the update and after this conversion processing, at least one of said standby system processing apparatuses operates as a new active system processing apparatus and the operational processing apparatus updates the program as a standby system processing apparatus.

11. A communication control apparatus that comprises a plurality of processing apparatuses and storing means for storing data shared by said processing apparatuses, executes a program using one processing apparatus as an active system processing apparatus and updates the program using the other processing apparatuses as standby system processing apparatuses, wherein said standby processing apparatuses erase data of a first area which is an area for storing data processed by said storing means, said storing means secures a second area which is a new storage area, said active system processing apparatus carries out a first conversion that converts old type data of the data entered by said active system processing apparatus and handled by the program before the update to new type data handled by the program after the update and stores in a second area, carries out a second conversion that stores the old type data entered during the first conversion in the first area and converts the old data stored in the first area to new type data and stores in the second area, and when all the old type data is converted to new type data, said active system processing apparatus is autonomously changed to operate as the standby system and the standby system processing apparatus is autonomously changed to operate as the active system.

12. The communication control apparatus according to claim 11, wherein after changed to operate as the standby system, the active system processing apparatus copies the data stored in the second area to a third area which is a storage area to store data processed by said active system processing apparatus using the storing means, stores the data entered during this copying processing in the second area and third area, and after the data in the second area and the data in the third area match, notifies said standby system processing apparatus of the data match.

13. The communication control apparatus according to claim 12, wherein in the case where old type data remains in the first area after a changeover from the standby system to the active system, the standby system processing apparatus carries out a third conversion that converts this old type data to new type data and stores the data in the second area, erases the converted old type data from the first area, and after the third conversion is completed, stores information indicating completion of the third conversion in the storing means.

14. The communication control apparatus according to claim 13, wherein after the information indicating completion of the third conversion is stored in the storing means, the old type data of the data entered from the outside is stored in the first area, the old type data stored in the first area is converted to new type data and stored in the second area.

15. The communication control apparatus according to claim 12, wherein after the active system processing apparatus is changed to operate as the standby system and the data in the second area and the data in the third area match, the standby system processing apparatus determines whether the old type data remains in the storing means or not, executes a program to process only the new type data when the old type data does not remain, stops the program for converting old type data to new type data and the program for processing both new type data and old type data and notifies said active system processing apparatus that the entire data conversion is completed.

16. The communication control apparatus according to claim 15, wherein upon receiving information that the entire data conversion is completed from the standby system processing apparatus, the active system processing apparatus is autonomously changed to operate as the standby system and the standby system processing apparatus is autonomously changed to operate as the active system.

17. A method of switching between a plurality of processing apparatuses that executes a program using one processing apparatus as an active system processing apparatus and updates a program that operates other apparatuses as standby system processing apparatuses, wherein old type data handled by the program before the update is converted to new type data handled by the program after the update, the active system processing apparatus is changed to operate as the standby system, the standby system processing apparatus is changed to operate as the active system and the old type data remaining after this changeover is converted to new type data.
